# EUROPEAN PATENT SPECIFICATION

(11) **EP 3 848 172 B1**
(45) Date of publication and mention of the grant of the patent: **17.04.2024**
(21) Application number: 21150749.6
(22) Date of filing: 08.01.2021
(51) Int. Cl.: B28B 1/26

(54) **APPARATUS FOR FORMING CERAMIC ARTICLES THROUGH PRESSURE CASTING**
VORRICHTUNG ZUR HERSTELLUNG VON KERAMISCHEN GEGENSTÄNDEN DURCH DRUCKGIESSEN
APPAREIL DE FORMATION D'ARTICLES CÉRAMIQUES PAR COULÉE SOUS PRESSION

(30) Priority: 08.01.2020 IT 202000000166; 08.01.2020 IT 202000000169
(43) Date of publication of application: 14.07.2021
(73) Proprietor: SACMI COOPERATIVA MECCANICI IMOLA SOCIETA' COOPERATIVA, 40026 Imola (BO) (IT)
(72) Inventor: FONTANA, Francesco, 40026 IMOLA (BO) (IT)
(74) Representative: Studio Torta S.p.A.

(56) References cited:
- EP-A1- 0 689 912
- EP-A2- 1 043 132

## Description

### CROSS-REFERENCE TO RELATED APPLICATIONS

This patent application claims priority from Italian patent applications no. 102020000000166 and no. 102020000000169 filed on 08/01/2020.

### TECHNICAL FIELD

The present invention relates to an apparatus for forming ceramic articles through pressure casting.

In particular, the present invention can be advantageously, but not exclusively, applied in pressure casting for forming sanitaryware, to which the description below shall explicitly refer, but without loss of generality.

### BACKGROUND OF THE INVENTION

The forming of ceramic articles, in particular sanitaryware (such as washbasins, cisterns, bidets, toilets, etc.) generally takes place through the casting of slip inside hygroscopic and/or permeable moulds, which can be composed of two or more parts (heads), depending on the complexity of the article to be formed.

Document EP1043132 discloses an apparatus for pressure casting sanitary appliances in accordance with the preamble of claim 1, more precisely comprising a female mould part being surrounded by at least one frame, between which and said portion there being defined a space occupied by at least one inflatable element fed with pressurized fluid.

Document EP0689912 discloses a method for the slip-casting of ceramic articles, wherein the method involves inserting fluid into several air pockets.

Typically, moulds made of porous resin (or plaster) are used to form ceramic articles, so as to allow dehydration of the slip during pressure casting. In other words, the porosity of the mould allows the water contained in the slip to be removed during forming.

Obviously, in addition to the direction of closing (i.e., the direction in which the heads move), moulds are also subjected to high stresses in directions orthogonal to the direction of closing. Therefore, they are provided with lateral reinforcement structures which are designed to limit the outward deformations of the mould. Usually, these structures are metal rims, which generally comprise adjustable (pre-loadable) elements, which thus allow a pre-compression of the sidewalls of the mould.

These solutions allow a reduction in lateral deformations of the mould and consequently increase its strength, as the deformation imposed by the pre-compression, being opposed to the deformation caused by the pressure of the slip, at least partially offsets its effects, limiting the stresses inside the mould during casting.

Notwithstanding the use of the aforesaid lateral reinforcements provided with adjustable elements, the maximum permissible casting pressure value is limited by the aforesaid deformations that the mould is subject to during casting. These deformations, due to high mechanical stresses, are the cause of premature breakages of the mould itself, or in any case of high stresses inside the article being formed. In the majority of cases, said stresses cause breakage of the article during the demoulding step (extraction of the article from the mould), or during the subsequent processing steps (i.e., drying and firing).

Therefore, to avoid breakages and/or high stresses inside the article, it is necessary to use limited casting pressures, thereby increasing the time required to complete forming of the article.

In recent years, in order to increase the casting pressure and speed up the process, increasingly more rigid lateral retaining structures have been produced, so as to limit the outward deformations of the mould. However, even by producing a (theoretically) infinitely rigid lateral retaining structure, the problem would not be completely solved, due to the compressibility of the resin with which modern moulds are made. In fact, although completely preventing the outward deformations of the mould, due to the casting pressure the forming cavity expands causing an elastic contraction of the porous resin of which the walls of the mould are made.

The elastic contraction of the walls of the mould causes considerable drawbacks during demoulding of the piece, as once the casting pressure is removed, the walls of the mould return to their original volume, causing clamping of the piece in the forming cavity.

Moreover, in the prior art solutions, the lateral retaining structures do not have an opposing pressure that can be varied and adjusted during the casting step, which would allow an improvement in the response of the mould to the pressures exerted during the forming step.

The object of the present invention is to produce an apparatus that allows the drawbacks of the prior art to be at least partially overcome, while at the same time being easy and economical to produce.

### SUMMARY

In accordance with the present invention an apparatus is provided for forming ceramic articles through pressure casting as defined in the appended independent claim and, preferably, in any one of the claims depending directly or indirectly on the independent claim.

The dependent claims describe preferred embodiments of the present invention forming an integral part of the present description.

### BRIEF DESCRIPTION OF THE DRAWINGS

The present invention will now be described with reference to the accompanying drawings, which illustrate some non-limiting embodiments thereof, wherein:
- Fig. 1 is a sectional front view of an apparatus in accordance with the present invention in an open configuration;
- Fig. 2 is a sectional front view of the apparatus of Fig. 1 in a closed configuration;
- Fig. 3 is a sectional front view of a detail of the apparatus of Fig. 2;
- Fig. 4 is a sectional side view of the apparatus of Fig. 2;
- Fig. 5 is a sectional front view of an apparatus in accordance with a further embodiment of the present invention;
- Fig. 6 is a perspective and schematic view of an oblong element which can be deformed and filled;
- Fig. 7 is a perspective and sectional view of the oblong element of Fig. 6;
- Fig. 8 is a perspective and sectional view of a detail of Fig. 7;
- Fig. 9 is a graph illustrating a first embodiment of the variation, as a function of time, of the pressure of the slip and of a fluid inside the oblong element (the time is indicated in the abscissa, the pressure in the ordinate);
- Fig. 10 is a graph illustrating a second embodiment of the variation, as a function of time, of the pressure of the slip and of the fluid inside the oblong element (the time is indicated in the abscissa, the pressure in the ordinate);
- Fig. 11 is a sectional side view of a further embodiment of the present invention comprising a mould in more than two parts; and
- Fig. 12 is a plan view of one of the planar retaining elements of Fig. 11, in which a recess can be seen inside of which an oblong element is inserted (folded).

### DETAILED DESCRIPTION

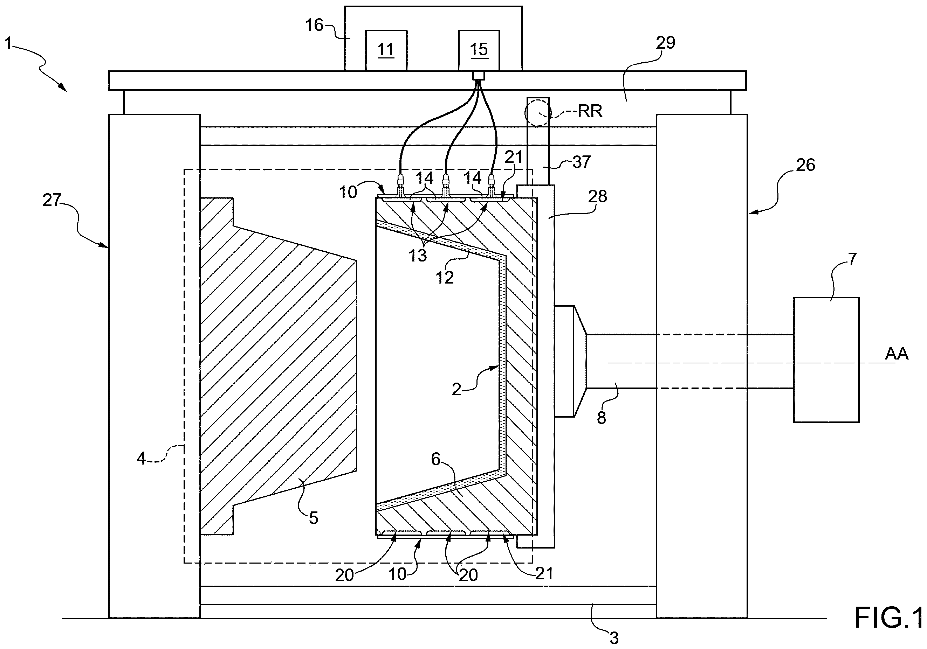

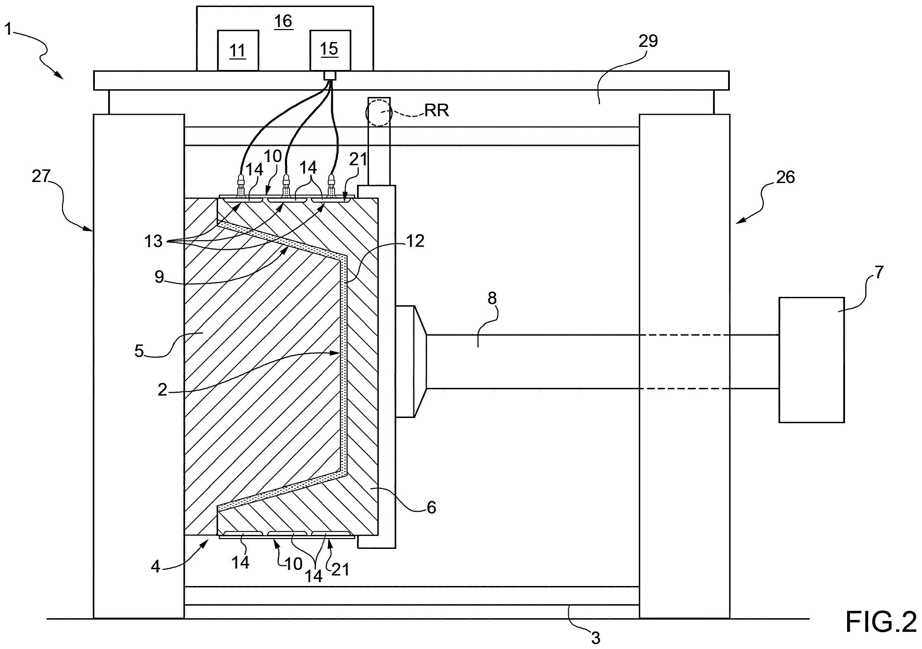

In Figs. 1 and 2, the reference numeral 1 indicates as a whole a non-limiting embodiment of an apparatus for forming ceramic articles 2 through pressure casting. In particular, the apparatus 1 is an apparatus for forming sinks or washbasins, but, naturally, it must be considered also suitable for forming any other ceramic article, in particular for forming sanitaryware, such as cisterns, bidets, toilets, etc.

More precisely, the ceramic articles 2 are any type of ceramic article that requires at least one forming through pressure casting.

According to some non-limiting embodiments (for example illustrated in Figs. 1 and 2), the apparatus 1 comprises a frame 3 and a mould 4 which, in turn, comprises a male head 5 and a female head 6 complementary to the male head 5. Moreover, the apparatus 1 comprises an actuator system 7, which is designed to move at least one between the male head 5 and the female head 6.

According to some non-limiting embodiments (as illustrated in Figs. 1 and 2), the actuator system 7 moves the female head 6 by means of a jack 8, which thrusts the female head 6 against the male head 5, which is fixed.

Alternatively, the actuator system 7 moves the male head 5 by means of the jack 8, which thrusts the male head 5 against the female head 6, which is fixed.

According to further non-limiting embodiments, not illustrated, at least two actuator systems 7 are present which each move a respective male 5 or female 6 head to bring them into contact.

In Fig. 1, the apparatus 1 is in an open configuration, in which the male head 5 and the female head 6 are distant from one another. In this configuration, following forming of an article 2, the article 2 is extracted. Moreover, the open configuration is used for maintenance and/or cleaning of the moulds.

In Fig. 2, the apparatus 1 is in a coupled (i.e., closed) configuration, in which the male head 5 is (at least partially) inserted in the female head 6. In particular, in the coupled configuration, the female head 6 is (partially) in contact with the male head 5 and they create a casting cavity 9 delimited between the female head 6 and the male head 5. In other words, the male head 5 and the female head 6 are clamped to one another through the action of the jack 8 and define the casting cavity 9 into which, in use, a ceramic mixture 12 (in particular slip) is injected.

Advantageously, but not necessarily, the apparatus 1 comprises (at least) one rim 10, which is arranged so as to at least partially surround the female head 6 of the mould 4. This rim 10, in use, has the function of reducing lateral deformation of the mould 4 (preventing a side wall 21 of the mould 4 from bulging).

According to some non-limiting embodiments (for example illustrated in Figs. 1, 2 and 4), the mould 4 (the female head 6) has a cylindrical shape and, consequently, the rim 10 also has a cylindrical shape.

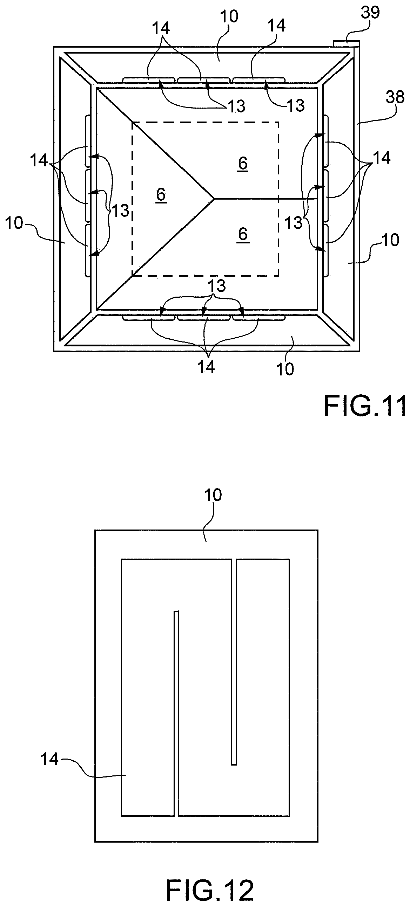

In some non-limiting embodiments such as those of Figs. 11 and 12, the mould 4 (more precisely, the female head 6) has a polygonal shape (for example rectangular, pentagonal, hexagonal, octagonal, etc.) and, consequently, the rim 10 also has a polygonal shape.

In other non-limiting embodiments, not illustrated, the mould 4 (the female head 6) has a different shape from the rim 10, in particular due to intermediate elements arranged between the rim 10 and the female head 6 of the mould 4.

The apparatus 1 further comprises a casting system 11, which is configured to feed a ceramic mixture 12 under pressure into the casting cavity 9 by means of known systems, not illustrated (tank, pump, etc.). In particular, the ceramic mixture 12 is slip, i.e., a suspension of ceramic powders (including, for example, clay) and water.

Advantageously, but not necessarily, the apparatus 1 (more precisely the mould 4) has at least one space 13 (in Figs. 1 and 2 there are three spaces 13) arranged between the rim 10 and the female head 6. In particular, the space 13 is an elongated cavity.

Moreover, the apparatus 1 comprises an oblong element 14, which can be deformed and filled and, in particular, is positioned inside said space 13.

The term "can be deformed" means that the cross-section of the oblong element 14 can change shape (according to its level of filling). Advantageously, but not necessarily, said cross-section can be deformed but cannot expand, i.e., in substance cannot increase its perimeter (circumference). The term "can be filled" means that the oblong element 14 is capable of housing a fluid L inside it. The oblong element 14 can be filled but not inflated, i.e., in substance cannot expand.

In some non-limiting cases, the fluid L is a Newtonian fluid, in particular is water or air (in particular, based on the type of system used).

In other non-limiting cases, the fluid L is an oil.

In further non-limiting cases, the fluid L is a blend.

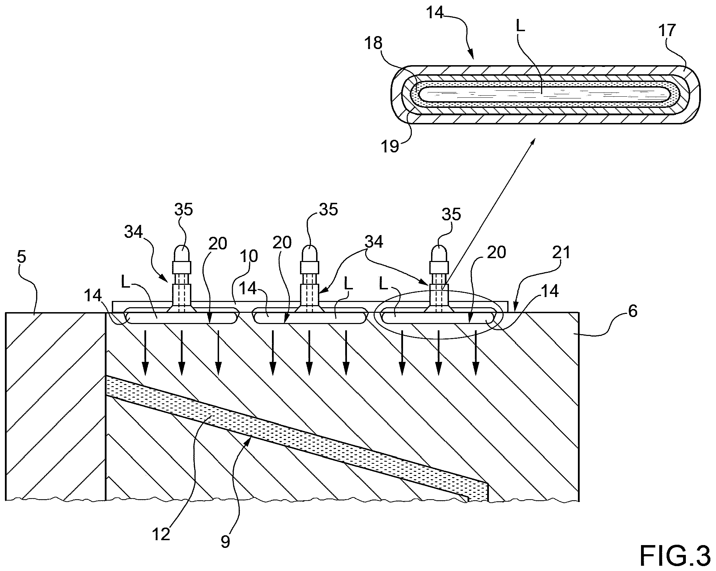

Moreover, the apparatus 1 comprises a hydraulic system 15 configured to inject the fluid L under pressure into the oblong element 14 so as to compress the female head 6 from outside towards the casting cavity 9 (as illustrated by the arrows in Fig. 3).

According to some non-limiting embodiments (for example illustrated in Fig. 3), the rim 10 has a variable thickness, in particular with furrows at the oblong elements 14.

In other non-limiting embodiments, not illustrated, the rim 10 has a constant thickness, in particular due to the complete insertion of the oblong element 14 inside the space 13.

In some non-limiting cases, not illustrated, the space 13 is created between the rim 10 (in particular with constant thickness) and the female head 6 by means of spacer elements, which are interposed between the rim 10 and the female head 6. In this way, it is possible to avoid carrying out subsequent machining operations on the head 6 or on the rim 10.

The oblong element 14 is a hose. In particular, the oblong element 14 is a hose of the type used to transport water or fluids for fighting fires.

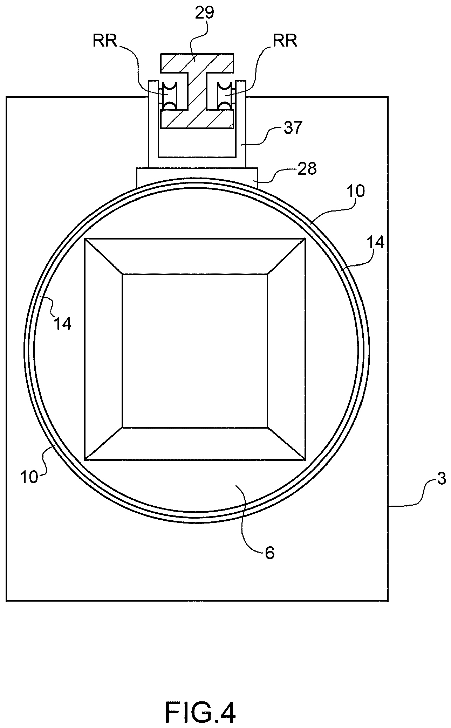

According to some non-limiting embodiments, such as the one illustrated in Fig. 4, at least one oblong element 14 (preferably all the oblong elements 14), the hose, is arranged so as to surround the female head 6.

In particular, the oblong element 14 is arranged so as to surround the female head 6 on a plane transverse to a direction of closing of the male 5 and female 6 heads. More in particular, the oblong element 14 is arranged so as to surround the head on a plane perpendicular to the direction of closing of the male 5 and female 6 heads.

According to other non-limiting embodiments, such as the one illustrated in Fig. 11, a plurality of oblong elements 14 (preferably all the oblong elements 14), the hoses, are arranged so as to surround the female head (heads) 6.

In particular, the oblong elements 14 are arranged so as to surround the female head 6 on all faces of a lateral surface of the mould 4 (identified by the faces of the female heads at the rim or rims 10).

Advantageously, but not necessarily, the element 14 is arranged around the female head 6 so as to compress the female head 6 along directions transverse to the direction of closing.

Advantageously, but not necessarily, and as illustrated in Figs. 1, 2, 4 and 5, the apparatus 1 comprises a control system 16, which is connected to the hydraulic system 15 and is configured to detect the pressure of the fluid L inside the oblong element 14.

In particular, the control system 16 comprises (at least) one pressure sensor (not illustrated) and (at least) one pressure transducer (not illustrated).

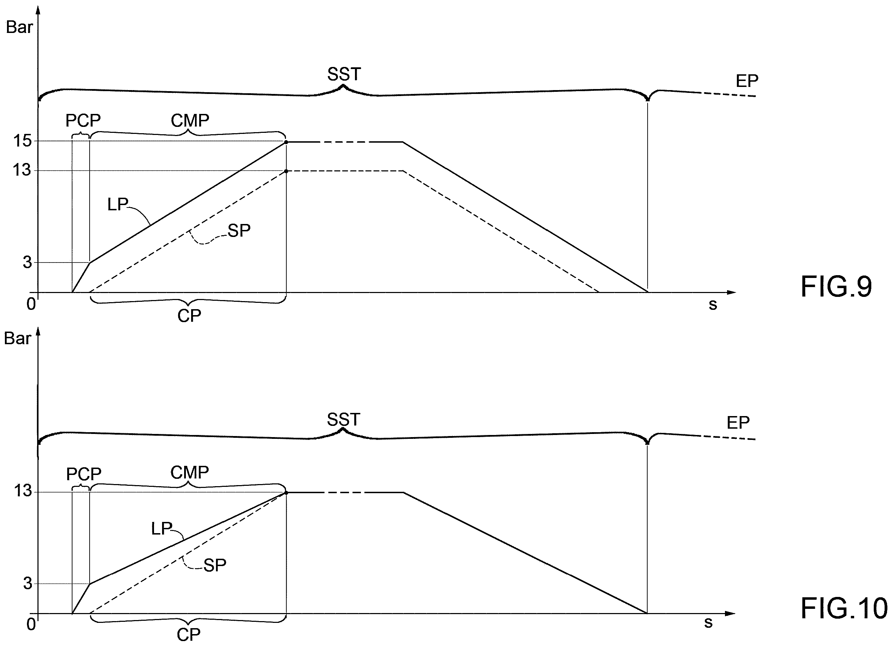

Advantageously, but not necessarily, and as illustrated in the graphs of Figs. 9 and 10, the control system 16 is configured to control the hydraulic system 15 so as to adjust the pressure of the fluid L inside the oblong element 14, in particular so as to keep the pressure of the fluid L within a given range. In other words, the control system 16 instantaneously adjusts (in particular with a finite sampling and control time) the pressure inside the oblong element 14 between a maximum pressure and a minimum pressure. More precisely, the control system 16 is configured to adjust the pressure of the fluid L with a closed loop control, i.e., a feedback control.

Advantageously, but not necessarily, and as illustrated in Fig. 3, the oblong element 14 (i.e., the hose) comprises a plurality of layers, among which there are at least a fibre layer 17, in particular a synthetic fibre layer, and at least an impermeable layer 18, in particular a rubber layer.

Advantageously, but not necessarily, the oblong element 14 also comprises a metal reinforcement 19. In some non-limiting cases, the metal reinforcement 19 is helical.

In other non-limiting cases, the metal reinforcement 19 comprises wires parallel to one another, in particular the metal reinforcement 19 is a mesh reinforcement. In some non-limiting cases, the reinforcement 19 is arranged between the layer 17 and the layer 18.

Advantageously, but not necessarily, and as illustrated in the non-limiting embodiments of Figs. 1 to 4, the space 13 is obtained by means of a recess 20 (in particular a cavity) on a side wall 21 of the female head 6. In some non-limiting cases, not illustrated, the recess 20 has a polygonal (cross) section. In other non-limiting cases, such as the one illustrated in Fig. 3, the recess 20 has a (cross) section with a rounded shape (without sharp corners).

In some non-limiting cases, the recess 20 is obtained through the removal of material (grinding, laser ablation, etc.). In other non-limiting cases, the recess 20 is obtained directly during formation of the female head 6 by means of casting (resin).

According to some non-limiting embodiments, such as those illustrated in the accompanying figures, the apparatus 1 comprises a plurality of spaces 13, inside of which there is (at least) one respective oblong element 14.

Advantageously, but not necessarily, the spaces are parallel to one another. In this way it is possible to (homogeneously) distribute the pressure exerted by the fluid L on the side wall 21 of the female head 6.

In some non-limiting cases, not illustrated, the spaces 13 and the respective oblong elements 14 inside them are arranged at predefined distances as a function of the shape of the article to be formed. In other words, in the case in which a pressure concentrated in a certain area of the mould 4 is required (for example, at the thinnest part of the female head 6 and therefore the most susceptible to deformation), the spaces 13 and the respective oblong elements 14 are close (closer) to one another, so as to oppose the deformation of that area of the mould 4; instead, when it is not necessary to have a pressure of the fluid L particularly concentrated in one area (for example, in the thickest part of the female head 6 and therefore the least susceptible to deformation), the spaces 13 and the respective oblong 14 elements are (more) distant from one another.

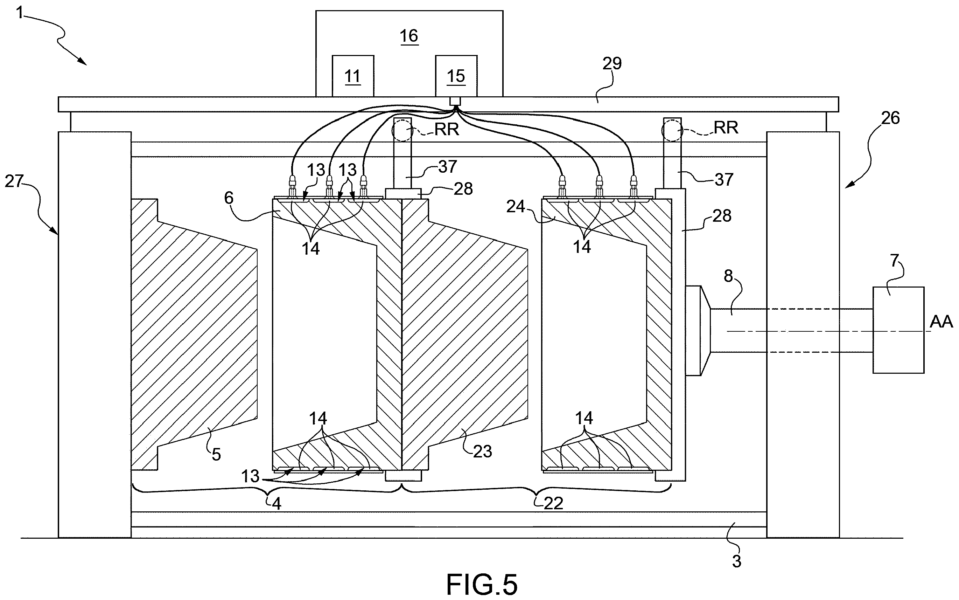

According to some non-limiting embodiments (for example illustrated in Fig. 5), the apparatus 1 comprises (at least) a further mould 22, in particular arranged in series with respect to the mould 4. The mould 22 comprises, in turn, a male head 23 and a female head 24. More precisely, the female head 6 of the mould 4 and the male head 23 of the mould 22 are joined in an integral manner (forming a moulding assembly 25) and are arranged so that the female head 6 faces the male head 5 and the male head 23 faces the female head 24.

In some non-limiting cases, the jack 8 directly moves the head 5, 6, 23 or 24 arranged at one end 26 of the apparatus 1. In particular, the heads 6 and 23 that form the moulding assembly 25 are moved indirectly by the jack 8. In other words, in use, the jack 8 moves the female head 24, which during its travel towards an end 27 opposite the end 26, comes into contact with the male head 23 (hence with the moulding assembly 25) and moves the moulding assembly 25 towards the male head 5 fixed to the end 26 of the apparatus 1 until all the moulds 4, 22 reach the coupled configuration.

In other non-limiting cases, not illustrated, the heads 5 and 24 arranged at the ends 26 and 27 are movable. In these cases, the moulding assembly 25 is fixed (or, alternatively, it is also movable).

In further non-limiting cases, not illustrated, the female head 24 is fixed and the jack 8 moves the male head 5 until all the moulds 4, 22 reach the coupled configuration.

In some non-limiting cases, not illustrated, there are a larger number of moulding assemblies 25, arranged between a male head 5 and a female head 24.

According to some non-limiting embodiments (for example illustrated in Fig. 5), each head 5, 6, 23 and 24 has an upper flange 28 for connection to a beam 29, in particular having an I-shaped section.

Advantageously, but not necessarily, the heads 5, 6, 23 and 24 are each supported by the beam 29 through a respective sliding block 37, which allows the moving heads 6, 23 and 24 to translate along a longitudinal axis AA of the jack 8 by means of wheels RR.

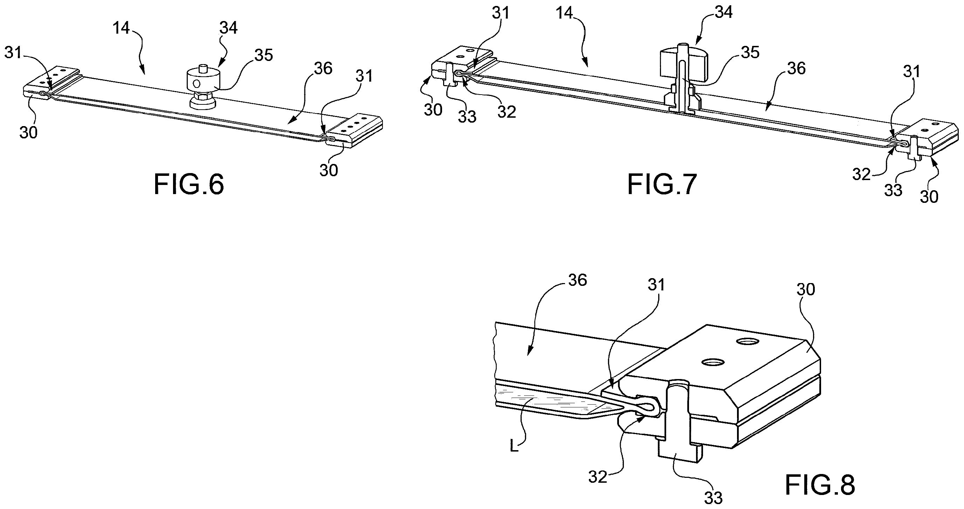

Advantageously, but not necessarily and as illustrated in the non-limiting embodiment of Figs. 6, 7 and 8, the apparatus 1 also comprises (at least) one clamp 30 which closes (at least) one end 31 of the oblong element 14.

Advantageously, but not necessarily, the clamp comprises a niche 32 inside which the oblong element 14 is folded onto itself. In particular, the oblong element 14 is fixed inside the niche 32 closing the clamp 30 with specific fixing elements 33, such as a screw, a rivet, a clip, a vice, etc. The niche 32 inside the clamp 30 allows the useful life of the oblong element 14 to be prolonged, preventing it from being folded with angles that are too tight, which would impair its strength.

Advantageously, but not necessarily and as illustrated in the non-limiting embodiment of Figs. 6, 7 and 8, the oblong element 14 has a joining assembly 34 to establish a communication between the inside of the oblong element 14 and the outside. In particular, the hydraulic system 15 is connected to the joining assembly 34 and is designed to inject the fluid L under pressure into the oblong element 14 through the joining assembly 34; in particular, the joining assembly 34 comprises a pressure valve 35; more in particular, the joining assembly 34 is arranged on a side wall 36 of the oblong element.

In some non-limiting cases, such as the one illustrated in Fig. 11, the mould 4 comprises more than one male head 5 and/or more than one female head 6 (in the example of Fig. 11 there are three female heads 6, while the male heads 5 are not visible as they are concealed inside the female heads 6).

Alternatively or additionally, and as illustrated in the non-limiting embodiment of Figs. 11 and 12, the side wall 21 (the side walls 21) of the female head (heads) 6 is (are) planar.

According to some non-limiting embodiments (for example illustrated in Fig. 11), the rim 10 is divided into several parts (so as to be able to clamp the planar female head 6). In these cases, advantageously, but not necessarily, there is a clamping element 38 provided with a closing device 39. In use, the mould 4 is inserted inside the rim 10 (divided into several parts). Subsequently, the rim 10 clamps the female heads 6 by means of the clamping element 38.

According to some non-limiting embodiments (for example illustrated in Fig. 11), the space 13 (in particular the recess 20) is obtained on the rim 10 (or on parts thereof). In this way, it is possible to insert the mould 4 inside the rim 10 even during the process without the risk of damaging or shifting the oblong elements 14, arranged inside the space 13.

Advantageously, but not necessarily, particularly in the case in which the side wall 21 is planar, the oblong element 14 is folded inside the space 13. In particular, as illustrated in the non-limiting embodiment of Fig. 12, the space 13 has a serpentine shape (or in any case suitable to distribute the space 13, and consequently the oblong element 14, along the majority of the side wall 21) and the oblong element 14 is folded onto itself so as to form a substantially 45° fold with respect to the previous direction of the oblong element 14.

In other non-limiting cases, not illustrated, the oblong element 14 is shaped so as to be housed inside the space 13 without requiring to be folded.

In accordance with a second non-claimed aspect of the present disclosure, a method is provided for forming ceramic articles through pressure casting.

Hereinafter, reference shall be made to the non-limiting embodiments of Figs. 9 and 10, which represent the trend of the pressures (ordinate) in relation to the time (abscissa) both of the fluid L, and of the ceramic mixture 12.

The method comprises a clamping step SST, during which the female head 6 of the mould 4 and the male head 5 of the same mould 4 are moved closer towards one another, brought into contact and clamped, so as to create the casting cavity 9 inside the mould 4.

Advantageously, but not necessarily, the pressure at which the female head 6 and the male head 5 of the mould 4 are clamped is variable. More precisely, it follows a profile similar to that of the ceramic mixture illustrated in Figs. 9 and 10. In this way, sudden overloading of the mould 4 is prevented without it being filled with the ceramic mixture.

Moreover, the method comprises a casting step CP, subsequent to the clamping step SST, during which the casting system 11 injects (in particular, in a controlled manner) the ceramic mixture 12 (in particular slip) having a pressure SP into the casting cavity 9.

In addition, the method comprises a demoulding step EP, subsequent to the casting step CP, during which the male head 5 and the female head 6 of the mould 4 are moved farther away from one another (the mould 4 is arranged in the open configuration) and a ceramic article 2 is extracted from the casting cavity 9.

The method further comprises a compression step CMP, which is at least partially overlapping (simultaneous to) the casting step CP, during which the hydraulic system 15 injects, in a controlled manner, the fluid L having a pressure LP into the oblong element 14, which is positioned around the female head 6 of the mould 4, in particular into the space 13. In this way, a force is exerted (on the female head 6) in the direction of the casting cavity 9 (in particular, so as to offset - at least partially - the deformation of the female head 6 of the mould 4, said deformation being caused by the pressure SP).

The term "in a controlled manner" means that the pressure LP is detected and set according to known control methods, such as a PID (proportional-integral-derivative) control.

The pressure SP and the pressure LP are variable. In other words, the pressure SP and the pressure LP are adjusted by the control system 16. In particular, the pressure SP and the pressure LP are adjusted respectively by the casting system 11 and by the hydraulic system 15. More precisely, the control system 16 adjusts the casting system 11 and the hydraulic system 15.

The pressure LP is greater than the pressure SP for at least one part of the (during the whole of the) casting step CP (for example, as illustrated in the non-limiting embodiments of Figs. 9 and 10).

In particular, the pressure LP is varied in time as a function of the pressure SP (more in particular, so that the pressure LP is greater than the pressure SP for, at least a part of, the casting step).

In some non-limiting embodiments, such as those illustrated in Figs. 9 and 10, the compression step CMP ends simultaneously or subsequently to the casting step CP, so as to facilitate demoulding of the ceramic article 2.

In some non-limiting cases, such as those illustrated in Figs. 9 and 10, the method comprises a constant pressure step, subsequent to the compression step CMP, during which the pressure LP and the pressure SP are kept substantially constant. In this way, the article is stabilised inside the cavity 9.

In some non-limiting cases, not illustrated, the casting step CP ends subsequently to the compression step CMP. In particular, the casting step CP is at least partially simultaneous to the constant pressure step.

More precisely, the casting step CP ends at the end of the constant pressure step.

Advantageously, but not necessarily, the method also comprises a decompression step, prior to the demoulding step EP, during which the pressure LP and the pressure SP decrease, in particular until reaching atmospheric pressure.

Advantageously, but not necessarily, and as illustrated in the non-limiting embodiments of Figs. 9 and 10, the method comprises a pre-compression step PCP, prior to the compression step CMP, during which the hydraulic system 15 sets the pressure LP of the fluid inside the oblong element 14 to a predefined value greater than 0 Bar.

In some non-limiting cases, such as those illustrated in the embodiments of Figs. 9 and 10, the pre-compression step PCP is (at least partially) prior to the casting step CP.

In other non-limiting cases, not illustrated, the pre-compression step PCP is (at least) partially simultaneous to the casting step CP.

Advantageously, but not necessarily, at the end of the pre-compression step PCP, the pressure LP passes from an atmospheric pressure value (substantially equal to 0 Bar) to reach a value ranging from 2 to 4 Bar, more precisely substantially equal to 3 Bar.

Advantageously, but not necessarily, and as illustrated in the embodiments of Figs. 9 and 10, the pressure LP of the fluid inside the oblong element 14 (in particular inside the hose) is always greater than the pressure SP of the ceramic mixture 12 (in particular of the slip injected by the casting system 11 into the casting cavity 9).

In some non-limiting cases, such as the one illustrated in the embodiment of Fig. 9, during at least part of the casting step CP (in particular during the whole of the casting step CP), the pressure SP and the pressure LP increase (or decrease), in particular in the same manner (i.e., by the same amount). In particular, during (the whole of) the casting step CP the difference between the pressure SP and the pressure LP remains substantially the same. In this way, the pressure SP of the ceramic mixture 12 that tends to cause the side wall 21 of the female head 6 to bulge is equally offset by the pressure LP when the pressure SP increases.

In other non-limiting cases, such as the one illustrated in the embodiment of Fig. 10, the difference between the pressure LP and the pressure SP varies during (at least part of) the casting step CP. In particular, the pressure LP and the pressure SP have substantially the same value at the end of the casting step CP. In this way, it is possible to obtain a saving of energy and in any case ensure that the pressure SP inside the female head 6 of the mould is the same as the pressure LP of the fluid. Moreover, in this way it is possible to increase the maximum pressure SP so that it is the same as the pressure LP.

According to some non-limiting embodiments (for example illustrated in Figs. 9 and 10), the pressure LP and the pressure SP vary linearly (i.e., with a substantially constant angular coefficient between pressure and time) during the pre-compression step PCP and/or during the compression step CMP.

In other non-limiting embodiments, not illustrated, the variation between the pressure LP and the pressure SP is nonlinear, for example parabolic or cubic.

Advantageously, but not necessarily, during the compression step CMP, the pressure LP is from 1 to 20 Bar. In particular, the pressure LP is from 3 to 15 Bar.

Advantageously, but not necessarily, during the compression step CMP the pressure SP is from 0 to 17 Bar. In particular, the pressure SP is from 0 to 13 Bar.

In use, during the pre-compression step PCP and/or during the compression step CMP, the hydraulic system 15 injects the fluid L into a plurality of the oblong elements, so as to pre-compress and/or compress the casting cavity 9 and prevent a lateral deformation of the mould 4 and to balance the internal pressure that the mould 4 is subjected to and that elastically compresses the walls of the mould 4.

In some non-limiting cases, the hydraulic system 15 injects the fluid L into the oblong elements 14 with pressures LP (at least partially) different to one another, in particular, the hydraulic system 15 injects a plurality of different liquids L into the plurality of oblong elements 14. In this way, as stated previously in relation to the position of the spaces 13, the pressure LP is differentiated, for example based on the thickness of the wall of the female head 6.

Advantageously, but not necessarily, the apparatus 1 described above is designed to implement the method described herein.

Although the invention described above makes particular reference to some precise embodiments, it must not be considered limited to these embodiments, and its scope includes all variants, modifications or simplifications covered by the appended claims, such as a different geometry of the mould 4, a different arrangement of the oblong element 14, a different number of heads 5 or 6 for each mould 4 or a different number of moulding assemblies 25, a different fluid L, a different hydraulic system 15 or a different casting system 11 of the ceramic mixture 12, etc.

The apparatus and the method described above achieve many advantages.

Firstly, the presence of the oblong element 14 facilitates demoulding (extraction) of the articles 2 from the female head 6 (thereby reducing the risk of obtaining damaged articles 2) and extends the useful life of the mould 4.

In particular, the presence of the space 13 obtained as recess 20 on the side wall 21 of the female head 6 allows the oblong element 14 to be housed stably.

Also, the fact that the pressure LP of the fluid is always greater than the pressure SP of the ceramic mixture 12 contributes to ensuring that the article 2 does not remain clamped inside the mould after forming and that no internal stresses are created in the article that would risk breakage thereto or premature damage to the mould 4.

Moreover, the use of a hose is a very economical and flexible solution for obtaining the oblong element 14. In particular, the niche 32 inside the clamp 30 allows the useful life of the oblong element 14 to be prolonged by preventing it from being folded with angles that are too tight, which would impair its strength.

Finally, adjustment of the pressures LP and SP allows balancing of the pressure inside the mould to be optimised so as to reduce energy consumption with respect to prior art solutions.

## Claims

1. An apparatus (1) for forming ceramic articles (2) through pressure casting comprising: a frame (3); a mould (4), which, in turn, comprises at least one male head (5) and at least one female head (6), which is complementary to the male head (5); and at least one actuator system (7), which is designed to move at least one between the male head (5) and the female head (6) relative to the other one so as to cause the apparatus (1) to shift from an open configuration, in which the male head (5) and the female head are distant from one another, to a coupled configuration, in which the male head (5) is at least partially inserted in the female head (6); in the coupled configuration, the female head (6) is partially in contact with the male head (5) and the apparatus (1) has a casting cavity (9) delimited between the female head (6) and the male head (5);
the apparatus (1) further comprises at least one rim (10), which is arranged so as to at least partially surround the female head (6); and a casting system (11), which is configured to feed a ceramic mixture (12) under pressure into the casting cavity (9);
wherein the apparatus has at least one space (13), in particular an elongated cavity, arranged between the rim (10) and the female head (6); an oblong element (14), which can be deformed and filled and is arranged inside said space (13); and a hydraulic system (15), which is configured to inject a fluid (L) under pressure into the oblong element (14) so as to compress the female head (6) from the outside towards the casting cavity (9); wherein the oblong element is a flexible tube;
wherein the oblong element (14) is a hose;
**characterized in that** the cross-section of the oblong element (14) can be deformed but cannot expand, namely the oblong element (14) can be filled but not inflated.

2. The apparatus (1) according to claim 1 and comprising a control system (16), which is connected to the hydraulic system (15) and is configured to detect the pressure of the fluid (L) inside the oblong element (14).

3. The apparatus (1) according to claim 2, wherein the control system (16) is configured to control the hydraulic system (15) so as to adjust the pressure of the fluid (L) inside the oblong element (14), in particular so as to keep the pressure of the fluid (L) inside the oblong element (14) within a given range; in particular, the control system (16) is configured to adjust the pressure with a closed loop control.

4. The apparatus (1) according to any one of the preceding claims, wherein the oblong element (14) comprises a plurality of layers, among which there are at least a fibre layer (17), in particular a synthetic fibre layer, and at least an impermeable layer (18), in particular a rubber layer.

5. The apparatus (1) according to any one of the preceding claims, wherein the oblong element (14) comprises a helical reinforcement (19), in particular made of metal.

6. The apparatus (1) according to any one of the preceding claims, wherein the space (13) is obtained by means of a recess (20) on a side wall (21) of the female head (6), in particular the recess (20) has a polygonal or cylindrical cross section.

7. The apparatus (1) according to any one of the preceding claims, wherein there are different oblong elements inside the same space (13).

8. The apparatus (1) according to any one of the preceding claims and comprising a plurality of spaces, inside which there is at least one oblong element (14).

9. The apparatus (1) according to claim 8, wherein the spaces are parallel to one another.

10. The apparatus (1) according to any one of the preceding claims and comprising at least one further mould (22), which, in turn, comprises a further male head (23) and a further female head (24); said female head (6) and said further male head (23) are joined in an integral manner and are arranged so that said female head (6) faces said male head (5) and said further male head (23) faces said further female head (24).

11. The apparatus (1) according to any one of the preceding claims and comprising at least one clamp (30), which closes at least one end (31) of the oblong element (14); in particular, the clamp (30) comprises a niche (32), inside which the oblong element (14) is folded onto itself.

12. The apparatus (1) according to any one of the preceding claims, wherein the oblong element (14) has a joining assembly (34) to establish a communication between the inside of the oblong element (14) and the outside; the hydraulic system (15) is connected to the joining assembly (34) and is designed to inject the fluid (L) under pressure into the oblong element (14) through the joining assembly (34); in particular, the joining assembly (34) comprises a valve (35); in particular, the joining assembly (34) is arranged on a side wall (36) of the oblong element (14).

13. The apparatus (1) according to any one of the preceding claims, wherein the mould (4) comprises a plurality of male heads and/or a plurality of female heads.

14. The apparatus (1) according to any one of the preceding claims, wherein the oblong element (14) is folded inside the space (13); in particular the space (13) has a serpentine shape.

## Patentansprüche

1. Vorrichtung (1) zur Formgebung von keramischen Erzeugnissen (2) durch Druckgießen, die aufweist: einen Rahmen (3); eine Form (4), die ihrerseits mindestens einen Patrizenkopf (5) und mindestens einen Matrizenkopf (6) aufweist, der komplementär zum Patrizenkopf (5) ist; und mindestens ein Antriebssystem (7), das so gestaltet ist, dass es den Patrizenkopf (5) und/oder den Matrizenkopf (6) relativ zum anderen bewegt, um zu bewirken, dass die Vorrichtung (1) aus einer offenen Konfiguration, in der der Patrizenkopf (5) und der Matrizenkopf voneinander entfernt sind, in eine gekoppelte Konfiguration übergeht, in der der Patrizenkopf (5) mindestens teilweise im Matrizenkopf (6) eingeführt ist; wobei in der gekoppelten Konfiguration der Matrizenkopf (6) teilweise in Kontakt mit dem Patrizenkopf (5) steht und die Vorrichtung (1) einen Gießhohlraum (9) hat, der zwischen dem Matrizenkopf (6) und dem Patrizenkopf (5) begrenzt ist;
wobei die Vorrichtung (1) ferner aufweist: mindestens einen Rand (10), der so angeordnet ist, dass er mindestens teilweise den Matrizenkopf (6) umgibt; und ein Gießsystem (11), das so konfiguriert ist, dass es eine keramische Mischung (12) unter Druck in den Gießhohlraum (9) führt;
wobei die Vorrichtung aufweist: mindestens einen Raum (13), insbesondere einen länglichen Hohlraum, der zwischen dem Rand (10) und dem Matrizenkopf (6) angeordnet ist; ein langgestrecktes Element (14), das verformt und befüllt werden kann und im Raum (13) angeordnet ist; und ein Hydrauliksystem (15), das so konfiguriert ist, dass es ein Fluid (L) unter Druck in das langgestreckte Element (14) einspritzt, um den Matrizenkopf (6) von außen zum Gießhohlraum (9) hin zu komprimieren; wobei das langgestreckte Element (14) eine flexible Röhre ist;
wobei das langgestreckte Element (14) ein Schlauch ist;
**dadurch gekennzeichnet, dass** der Querschnitt des langgestreckten Elements (14) verformt werden kann, aber nicht expandieren kann, das langgestreckte Element (14) also befüllt, aber nicht aufgeblasen werden kann.

2. Vorrichtung (1) nach Anspruch 1 und mit einem Steuersystem (16), das mit dem Hydrauliksystem (15) verbunden und so konfiguriert ist, dass es den Druck des Fluids (L) im langgestreckten Element (14) detektiert.

3. Vorrichtung (1) nach Anspruch 2, wobei das Steuersystem (16) so konfiguriert ist, dass es das Hydrauliksystem (15) steuert, um den Druck des Fluids (L) im langgestreckten Element (14) einzustellen, um insbesondere den Druck des Fluids (L) im langgestreckten Element (14) in einem vorgegebenen Bereich zu halten; und das Steuersystem (16) insbesondere so konfiguriert ist, dass es den Druck mit einer Rückführregelung einstellt.

4. Vorrichtung (1) nach einem der vorstehenden Ansprüche, wobei das langgestreckte Element (14) mehrere Schichten aufweist, zu denen mindestens eine Faserschicht (17), insbesondere eine Kunstfaserschicht, und mindestens eine undurchlässige Schicht (18), insbesondere eine Gummischicht, gehören.

5. Vorrichtung (1) nach einem der vorstehenden Ansprüche, wobei das langgestreckte Element (14) eine Spiralverstärkung (19) aufweist, die insbesondere aus Metall hergestellt ist.

6. Vorrichtung (1) nach einem der vorstehenden Ansprüche, wobei der Raum (13) mit Hilfe einer Aussparung (20) auf einer Seitenwand (21) des Matrizenkopfs (6) zustande kommt und die Aussparung (20) insbesondere einen polygonalen oder zylindrischen Querschnitt hat.

7. Vorrichtung (1) nach einem der vorstehenden Ansprüche, wobei unterschiedliche langgestreckte Elemente (14) im selben Raum (13) vorhanden sind.

8. Vorrichtung (1) nach einem der vorstehenden Ansprüche und mit mehreren Räumen, in denen mindestens ein langgestrecktes Element (14) vorhanden ist.

9. Vorrichtung (1) nach Anspruch 8, wobei die Räume parallel zueinander sind.

10. Vorrichtung (1) nach einem der vorstehenden Ansprüche und mit mindestens einer weiteren Form (22), die ihrerseits einen weiteren Patrizenkopf (23) und einen weiteren Matrizenkopf (24) aufweist; wobei der Matrizenkopf (6) und der weitere Patrizenkopf (23) einteilig verbunden und so angeordnet sind, dass der Matrizenkopf (6) zum Patrizenkopf (5) weist und der weitere Patrizenkopf (23) zum weiteren Matrizenkopf (24) weist.

11. Vorrichtung (1) nach einem der vorstehenden Ansprüche und mit mindestens einer Klammer (30), die mindestens ein Ende (31) des langgestreckten Elements (14) verschließt; wobei die Klammer (30) insbesondere eine Nische (32) aufweist, in der das langgestreckte Element (14) auf sich selbst gefaltet ist.

12. Vorrichtung (1) nach einem der vorstehenden Ansprüche, wobei das langgestreckte Element (14) eine Verbindungsanordnung (34) hat, um eine Kommunikation zwischen der Innenseite des langgestreckten Elements (14) und der Außenseite herzustellen; das Hydrauliksystem (15) mit der Verbindungsanordnung (34) verbunden und so gestaltet ist, dass es das Fluid (L) unter Druck über die Verbindungsanordnung (34) in das langgestreckte Element (14) einspritzt; die Verbindungsanordnung (34) insbesondere ein Ventil (35) aufweist; und die Verbindungsanordnung (34) insbesondere auf einer Seitenwand (36) des langgestreckten Elements (14) angeordnet ist.

13. Vorrichtung (1) nach einem der vorstehenden Ansprüche, wobei die Form (4) mehrere Patrizenköpfe und/oder mehrere Matrizenköpfe aufweist.

14. Vorrichtung (1) nach einem der vorstehenden Ansprüche, wobei das langgestreckte Element (14) im Raum (13) gefaltet ist; und der Raum (13) insbesondere eine Serpentinenform hat.

## Revendications

1. Appareil (1) pour former des articles en céramique (2) à travers une coulée sous pression comprenant : un cadre (3) ; un moule (4), qui, à son tour, comprend au moins une tête mâle (5) et au moins une tête femelle (6), qui est complémentaire à la tête mâle (5) ; et au moins un système d'actionneur (7), qui est conçu pour déplacer au moins l'une entre une tête mâle (5) et une tête femelle (6) par rapport à l'autre afin de provoquer le changement de l'appareil (1) d'une configuration ouverte, dans laquelle la tête mâle (5) et la tête femelle sont distantes l'une de l'autre, à une configuration couplée, dans laquelle la tête mâle (5) est au moins partiellement insérée dans la tête femelle (6) ; dans la configuration ouverte, la tête femelle (6) est partiellement en contact avec la tête mâle (5) et l'appareil (1) a une cavité de coulée (9) délimitée entre la tête femelle (6) et la tête mâle (5) ;
l'appareil (1) comprend en outre au moins un bord (10), qui est disposé pour entourer au moins partiellement la tête femelle (6) ; et un système de coulée (11), qui est configuré pour alimenter un mélange céramique (12) sous pression dans la cavité de coulée (9) ;
dans lequel l'appareil a au moins un espace (13), en particulier une cavité allongée, disposée entre le bord (10) et la tête femelle (6) ; un élément oblong (14), qui peut être déformé et rempli et est disposé à l'intérieur dudit espace (13) ; et un système hydraulique (15), qui est configuré pour injecter un fluide (L) sous pression dans l'élément oblong (14) de manière à compresser la tête femelle (6) de l'extérieur vers la cavité de coulée (9) ;
dans lequel l'élément oblong est un tube flexible ;
dans lequel l'élément oblong (14) est un tuyau ;
**caractérisé en ce que** la section transversale de l'élément oblong (14) peut être déformée mais ne peut pas être étendue, à savoir l'élément oblong (14) peut être rempli mais pas gonflé.

2. Appareil (1) selon la revendication 1 et comprenant un système de commande (16), qui est relié au système hydraulique (15) et est configuré pour détecter la pression du fluide (L) dans l'élément oblong (14).

3. Appareil (1) selon la revendication 2, dans lequel le système de commande (16) est configuré pour commander le système hydraulique (15) de manière à régler la pression du fluide (L) dans l'élément oblong (14), en particulier de manière à garder la pression du fluide (L) dans l'élément oblong (14) dans une plage donnée ; en particulier, le système de commande (16) est configuré pour régler la pression dans une commande en boucle fermée.

4. Appareil (1) selon l'une quelconque des revendications précédentes, dans lequel l'élément oblong (14) comprend une pluralité de couches, parmi lesquelles il y a au moins une couche de fibres (17), en particulier une couche de fibres synthétiques, et au moins une couche imperméable (18), en particulier une couche en caoutchouc.

5. Appareil (1) selon l'une quelconque des revendications précédentes, dans lequel l'élément oblong (14) comprend un renforcement hélicoïdal (19), en particulier constitué de métal.

6. Appareil (1) selon l'une quelconque des revendications précédentes, dans lequel l'espace (13) est obtenu au moyen d'un évidement (20) sur une paroi latérale (21) de la tête femelle (6), en particulier l'évidement (20) a une section transversale polygonale et cylindrique.

7. Appareil (1) selon l'une quelconque des revendications précédentes, dans lequel il y a différents éléments oblongs dans le même espace (13).

8. Appareil (1) selon l'une quelconque des revendications précédentes et comprenant une pluralité d'espaces, dans lesquels il y a au moins un élément oblong (14).

9. Appareil (1) selon la revendication 8, dans lequel les espaces sont parallèles l'un à l'autre.

10. Appareil (1) selon l'une quelconque des revendications précédentes et comprenant au moins un moule supplémentaire (22), qui, à son tour, comprend une tête mâle supplémentaire (23) et une tête femelle supplémentaire (24) ; ladite tête femelle (6) et ladite tête mâle supplémentaire (23) sont jointes de manière intégrale et sont disposées de manière à ce que ladite tête femelle (6) fait face à ladite tête mâle (5) et ladite tête mâle supplémentaire (23) fait face à ladite tête femelle supplémentaire (24).

11. Appareil (1) selon l'une quelconque des revendications précédentes et comprenant au moins une pince (30), qui ferme au moins une extrémité (31) de l'élément oblong (14) ; en particulier, la pince (30) comprend une niche (32), dans laquelle l'élément oblong (14) est replié sur lui-même.

12. Appareil (1) selon l'une quelconque des revendications précédentes, dans lequel l'élément oblong (14) a un ensemble de jonction (34) pour établir une communication entre l'intérieur de l'élément oblong (14) et l'extérieur ; le système hydraulique (15) est relié à l'ensemble de jonction (34) et est conçu pour injecter le fluide (L) sous pression dans l'élément oblong (14) à travers l'ensemble de jonction (34) ; en particulier, l'ensemble de jonction (34) comprend une valve (35) ; en particulier, l'ensemble de jonction (34) est disposé sur la paroi latérale (36) de l'élément oblong (14).

13. Appareil (1) selon l'une quelconque des revendications précédentes, dans lequel le moule (4) comprend une pluralité de têtes mâles et/ou une pluralité de têtes femelles.

14. Appareil (1) selon l'une quelconque des revendications précédentes, dans lequel l'élément oblong (14) est plié dans l'espace (13) ; en particulier l'espace (13) a une forme de serpentin.
